# FASCICULE DE BREVET EUROPEEN

(11) **EP 4 182 178 B1**
(45) Date de publication et mention de la délivrance du brevet: **28.08.2024**
(21) Numéro de dépôt: 21754837.9
(22) Date de dépôt: 16.07.2021
(51) Int. Cl.: B60H 1/00, F41H 7/03

(54) **DISPOSITIF DE DISTRIBUTION D'AIR DE CLIMATISATION POUR UNE TOURELLE**
VORRICHTUNG ZUR VERTEILUNG VON KLIMAANLAGENLUFT FÜR EINEN TURM
DEVICE FOR DISTRIBUTING AIR-CONDITIONING AIR FOR A TURRET

(30) Priorité: 17.07.2020 FR 2007472
(43) Date de publication de la demande: 24.05.2023
(73) Titulaire: KNDS France, 78034 Versailles Cedex (FR)
(72) Inventeur: DESCATOIRE, Xavier, 18023 Bourges (FR)
(74) Mandataire: Cabinet Chaillot
(86) Numéro de dépôt international: PCT/IB2021/056468
(87) Numéro de publication internationale: WO 2022/013839

(56) Documents cités:
- EP-A1- 2 145 786
- EP-A1- 3 077 235
- DE-A1- 102017 100 168
- FR-A1- 2 990 503
- FR-A1- 3 057 948

## Description

Le domaine technique de l'invention est celui des dispositifs de distribution d'air de climatisation pour véhicules militaires comportant une tourelle.

Les véhicules militaires avec tourelle nécessitent d'être climatisés et ventilés afin d'assurer des conditions de vie satisfaisantes à l'équipage et des températures de fonctionnement adéquates pour les équipements de bord.

La circulation de l'air dans la caisse est classiquement assurée par une unité de ventilation couplée avec une climatisation et un réseau de ventilation comportant des canalisations acheminant l'air vers les occupants et les équipements. La ventilation de la tourelle est en revanche très délicate du fait du confinement de la tourelle et de son caractère pivotant qui rend difficile la connexion du réseau de ventilation de la caisse avec un réseau de ventilation de la tourelle.

Le brevet EP3077235 propose un dispositif de distribution d'air de climatisation entre la caisse d'un véhicule et la tourelle qui comporte au moins une gouttière circulaire située en périphérie du fond de panier de tourelle.

Cette gouttière est solidaire du châssis alors qu'un capot solidaire de la tourelle couvre la partie ouverte de la gouttière tout en tournant relativement à la gouttière. De l'air frais injecté par une bouche de la gouttière peut ainsi circuler librement dans celle-ci jusqu'à ressortir par une bouche de sortie du capot et ceci pour toute orientation angulaire de la tourelle par rapport au châssis dans celle-ci.

Un tel dispositif pose le problème d'encombrer la périphérie du fond de panier de tourelle et impose d'avoir une forme circulaire qui n'est pas toujours adaptée à une cohabitation optimale avec des équipements proches et ayant une forme parallélépipédique par exemple.

L'invention propose donc un dispositif de distribution d'air pour une tourelle ayant un encombrement réduit et facilitant son adaptation à la forme des équipements environnants.

La demande de brevet FR3057948 divulgue un dispositif de distribution d'air de climatisation tel que défini dans le préambule de la revendication 1.

Ainsi, l'invention a pour objet un dispositif de distribution d'air de climatisation pour une tourelle d'un véhicule montée rotative par rapport à un châssis du véhicule, le dispositif comprenant un joint tournant destiné à relier électriquement la tourelle et le châssis du véhicule et à être coaxial à la tourelle, le joint tournant comportant un stator destiné à être solidaire du châssis et un rotor destiné à être solidaire de la tourelle, dispositif caractérisé en ce qu'il comporte un couvercle formant un caisson délimitant un volume dans lequel se loge le rotor et percé d'au moins une sortie d'air, couvercle solidaire de manière étanche du rotor, couvercle situé au centre d'un premier disque dont il est solidaire par les bords de ses parois latérales, dispositif comportant un second disque, appliqué contre le premier disque avec interposition d'un moyen d'étanchéité, second disque ayant sensiblement le même diamètre que le premier disque, coaxial à ce-dernier et solidaire du stator, donc pouvant tourner de façon étanche par rapport au premier disque et obturant le caisson délimité par le couvercle, le second disque comportant une entrée d'air disposée à proximité du stator, les parois latérales du couvercle étant situées à une distance du rotor telle que l'entrée d'air pratiquée dans le second disque est toujours au moins en partie débouchante dans le volume du caisson pour toutes les orientations angulaires du rotor par rapport au stator.

Selon un mode de réalisation, l'entrée d'air peut avoir une forme en L qui est délimitée en partie par le stator.

Avantageusement, le rotor pourra être solidaire d'une paroi de fond du couvercle.

Selon un mode particulier de réalisation, au moins une sortie d'air parmi la ou les sorties d'air est pratiquée au niveau de l'une des parois latérales du couvercle.

Selon un mode particulier de réalisation, au moins une sortie d'air parmi la ou les sorties d'air est pratiquée au niveau d'une paroi de fond du couvercle.

L'invention sera mieux comprise à la lecture de la description suivante, description faite à la lumière des dessins en annexe, dessins dans lesquels :
[Fig.1] représente une vue en coupe longitudinale schématique d'un véhicule équipé d'un dispositif selon l'invention.
[Fig.2] représente une vue partielle en coupe longitudinale du dispositif selon l'invention.
[Fig.3] représente une vue partielle en coupe transversale du dispositif selon l'invention.
[Fig.4] est analogue à la [Fig.3] mais montre le rotor pivoté d'environ 35° dans le sens inverse des aiguilles d'une montre.
[Fig.5] est analogue à la [Fig.3] mais montre le rotor pivoté d'environ 100° dans le sens des aiguilles d'une montre.

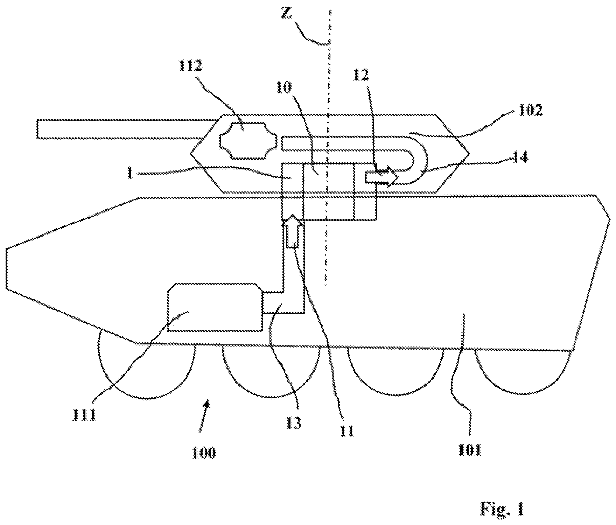

Selon la [Fig.1], un véhicule militaire 100 comporte un châssis 101 et une tourelle armée 102 montée pivotante en gisement par rapport au châssis 101 autour d'un axe vertical Z.

Le véhicule 100 comporte un joint tournant électrique 10 qui permet de transmettre des données et de l'énergie entre le châssis 101 et la tourelle 102 pour toutes les orientations angulaires de la tourelle autour de l'axe de gisement Z et ceci indépendamment du nombre de tours de la tourelle 102 par rapport au châssis 101.

Le véhicule 100 comporte un dispositif de distribution d'air 1 de climatisation qui permet de transmettre de l'air frais produit en châssis 101 et insufflé dans une première conduite 11 du dispositif 1. L'air frais est ensuite expulsé du dispositif 1 dans la tourelle 102 par le biais d'une seconde conduite 12. Le détail du dispositif 1 sera mieux vu aux figures suivantes.

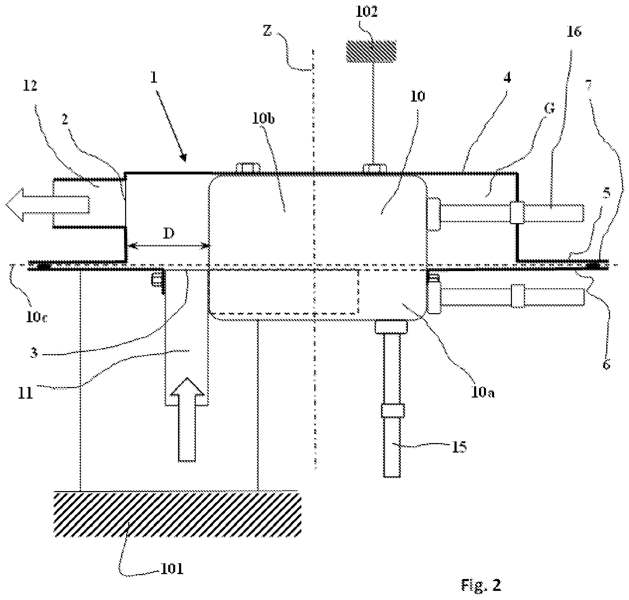

A la [Fig.2] on voit que le joint tournant électrique 10 comporte un stator 10a solidaire du châssis 101 et un rotor 10b solidaire de la tourelle 102. L'un pivotant par rapport à l'autre autour de l'axe de gisement Z de la tourelle 102. Le rotor 10b et le stator 10a sont séparés par un plan de joint 10c.

Le dispositif 1 comporte un couvercle 4 qui est solidaire du rotor 10b et qui forme un caisson 4 délimitant un volume dans lequel se loge le rotor 10b. Selon le mode de réalisation représenté aux figures, le couvercle 4 recouvre le rotor 10b et est solidaire de la tourelle 102.

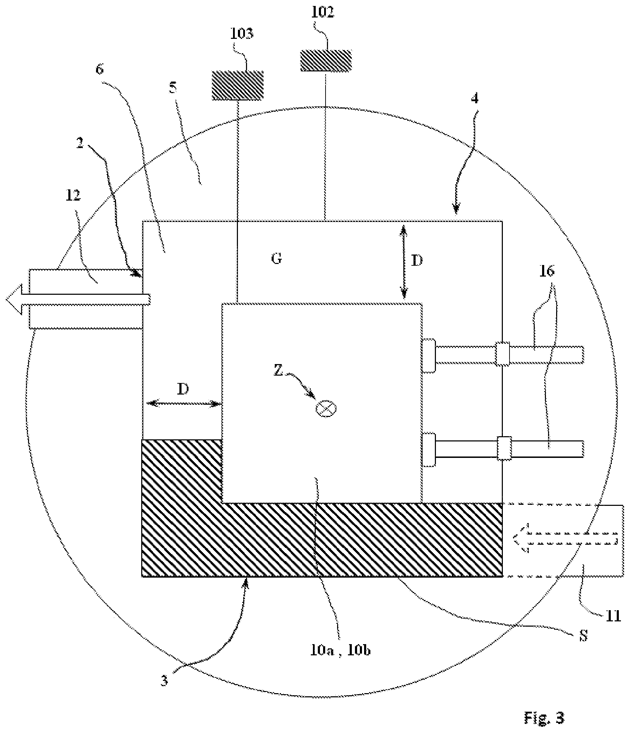

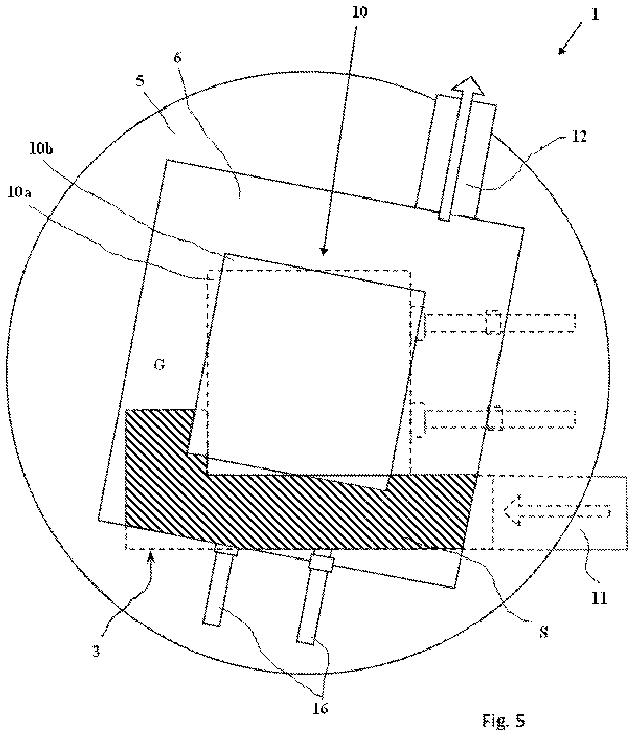

Des parois latérales du couvercle 4 sont solidaires d'un premier disque 5 parallèle au plan de joint 10c et centré sur l'axe de gisement Z. Ce premier disque 5 est mieux vu aux figures 3 à 5.

Comme visible à la [Fig.2], le dispositif comporte un second disque 6 qui est parallèle et coaxial au premier disque 5 et qui est situé en regard du premier. Les deux disques 5 et 6 ont le même diamètre et sont sensiblement plaqués l'un contre l'autre avec interposition d'un moyen d'étanchéité 7 voisin de leur circonférence respective. Le moyen d'étanchéité 7 pourra être un joint à lèvre 7 par exemple qui autorisera le pivotement relatif des disques 5 et 6 entre eux.

Le second disque 6 est solidaire du stator 10a lui-même solidaire du châssis 101. La solidarisation entre stator 10a et second disque 6 est étanche à l'air.

On note à la [Fig.2] et à la [Fig.3] que les parois latérales du couvercle 4 sont situées à distance D des parois latérales du rotor 10b, définissant ainsi dans le volume interne du caisson formé par le couvercle 4 une goulotte G destinée à la circulation d'air directement autour du joint tournant électrique 10. Le second disque 6 avec le stator 10a obturent le couvercle 4 et donc la goulotte G. La goulotte G a une section de forme rectangulaire compte tenu des géométries du caisson et du rotor 10b.

Le second disque 6 comporte une entrée d'air 3 ([Fig.2]) qui jouxte le stator 10a. La distance D entre les parois latérales du couvercle/caisson 4 et les parois du rotor 10b devra être choisie de manière telle que l'entrée d'air 3 comporte toujours une partie de sa section S qui débouche dans la goulotte G, c'est à dire entre les parois du couvercle/ caisson 4 et les parois du rotor 10b, et ceci pour toutes les orientations angulaires de la tourelle 101 par rapport au châssis 102. Ceci est concrètement toujours assuré lorsque le premier disque 5 et le second disque 6 ont sensiblement le même diamètre ou tout au moins lorsque le second disque 6 a un diamètre qui est supérieur à la diagonale interne du caisson 4 tout en ayant un diamètre néanmoins suffisant pour la mise en place du moyen d'étanchéité 7 entre les deux disques 5 et 6.

Au moins une sortie d'air 2 sera pratiquée dans la paroi de fond du caisson/couvercle 4 ou dans une des parois latérales du caisson/couvercle 4.

Comme on le voit à la [Fig.3], l'entrée d'air 3 a une forme en L délimitée en partie par le stator 10a. Cette entrée d'air a une section S maximale qui est hachurée à la [Fig.3].

Du fait des formes polygonales du joint tournant 10 et de la goulotte G qui l'entoure, visibles aux figures 3 à 5 pour différentes orientations de rotor 10b par rapport au stator 10a, la section S de l'entrée d'air 3 représentée avec des hachures peut varier mais elle permet toujours la pénétration d'air dans la goulotte G.

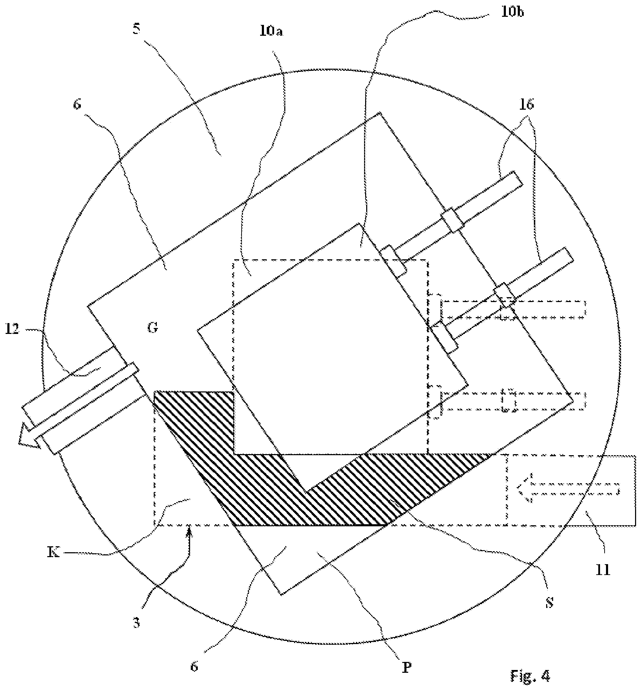

La mise en regard des disques 5 et 6 permet d'éviter les fuites d'air au niveau de la goulotte G ou de l'entrée d'air 3. Ainsi, à la [Fig.4] la goulotte G se trouve en regard d'une partie P du second disque 6 qui empêche la fuite de l'air de la goulotte G. Sur le même principe une partie K du premier disque 5 se trouve en regard d'une partie de l'entrée d'air 3 pour éviter la fuite d'air vers l'extérieur du dispositif 1.

Avantageusement, la circulation d'air directement autour des parois du rotor 10b permet un refroidissement efficace de celui-ci. On note que la goulotte G est traversée par des conducteurs électriques 16 qui bénéficient de la circulation d'air frais dans la goulotte G. Des conducteurs électriques 15 reliés au stator bénéficient quant à eux de la climatisation du châssis 101.

Comme visible à la [Fig.1], des conduites d'air 13 et 14 sont connectées respectivement à l'entrée d'air 11 et à la sortie d'air 12 du dispositif 1 pour faciliter l'acheminement d'air frais depuis un climatiseur 111, situé dans le châssis 101, vers des équipements 112 situés dans la tourelle 102.

L'invention permet donc d'assurer une continuité de distribution de l'air entre un châssis et une tourelle pour toutes les orientations de la tourelle par rapport au châssis et ceci en occupant le minimum d'espace autour du joint tournant électrique.

## Revendications

1. Dispositif de distribution d'air (1) de climatisation pour une tourelle (102) d'un véhicule (100) montée rotative par rapport à un châssis (101) du véhicule, le dispositif (1) comprenant un joint tournant (10) destiné à relier électriquement la tourelle (102) et le châssis (101) du véhicule (100) et à être coaxial à la tourelle (102), le joint tournant (10) comportant un stator (10a) destiné à être solidaire du châssis (101) et un rotor (10b) destiné à être solidaire de la tourelle (102), dispositif (1) ca**ractérisé en ce qu**'il comporte un couvercle (4) formant un caisson délimitant un volume dans lequel se loge le rotor (10b) et percé d'au moins une sortie d'air (2), couvercle (4) solidaire de manière étanche du rotor (10b), couvercle (4) situé au centre d'un premier disque (5) dont il est solidaire par les bords de ses parois latérales, dispositif (1) comportant un second disque (6), appliqué contre le premier disque (5) avec interposition d'un moyen d'étanchéité (7), second disque (6) ayant sensiblement le même diamètre que le premier disque (5), coaxial à ce-dernier et solidaire du stator (10a), donc pouvant tourner de façon étanche par rapport au premier disque (5) et obturant le caisson délimité par le couvercle (4), le second disque (6) comportant une entrée d'air (3) disposée à proximité du stator (10a), les parois latérales du couvercle (4) étant situées à une distance (D) du rotor (10b) telle que l'entrée d'air (3) pratiquée dans le second disque (6) est toujours au moins en partie débouchante dans le volume du caisson pour toutes les orientations angulaires du rotor (10b) par rapport au stator (10a).

2. Dispositif de distribution d'air (1) selon la revendication 1, **caractérisé en ce que** l'entrée d'air (3) a une forme en L délimitée en partie par le stator (10a).

3. Dispositif de distribution d'air (1) selon une des revendications 1 ou 2, **caractérisé en ce que** le rotor (10b) est solidaire d'une paroi de fond du couvercle (4).

4. Dispositif de distribution d'air (1) selon une des revendications 1 à 3, **caractérisé en ce qu'**au moins une sortie d'air (2) parmi la ou les sorties d'air (2) est pratiquée au niveau de l'une des parois latérales du couvercle (4).

5. Dispositif de distribution d'air (1) selon une des revendications 1 à 4, **caractérisé en ce qu'**au moins une sortie d'air (2) parmi la ou les sorties d'air (2) est pratiquée au niveau d'une paroi de fond du couvercle (4).

## Patentansprüche

1. - Vorrichtung zur Verteilung von Luft (1) einer Klimaanlage für einen Turm (102) eines Fahrzeugs (100), der im Verhältnis zu einem Fahrgestell (101) des Fahrzeugs rotatorisch angebracht ist, wobei die Vorrichtung (1) eine Drehverbindung (10) umfasst, die bestimmt ist, den Turm (102) und das Fahrgestell (101) des Fahrzeugs (100) elektrisch zu verbinden und koaxial zum Turm (102) zu sein, wobei die Drehverbindung (10) einen Stator (10a) aufweist, der bestimmt ist, mit dem Fahrgestell (101) fest verbunden zu sein, und einen Rotor (10b), der bestimmt ist, mit dem Turm (102) fest verbunden zu sein, wobei die Vorrichtung (1) **dadurch gekennzeichnet, dass** sie einen Deckel (4) umfasst, der einen Kasten bildet, der ein Volumen begrenzt, in dem der Rotor (10b) untergebracht ist und von mindestens einem Luftauslass (2) durchbrochen ist, wobei der Deckel (4) mit dem Rotor (10b) dicht fest verbunden ist, wobei sich der Deckel (4) im Zentrum einer ersten Scheibe (5) befindet, mit der er anhand der Ränder seiner Seitenwände fest verbunden ist, wobei die Vorrichtung (1) eine zweite Scheibe (6) aufweist, die an der ersten Scheibe (5) mit Zwischenstellung eines Dichtungsmittels (7) anliegt, wobei die zweite Scheibe (6) etwa denselben Durchmesser wie die erste Scheibe (5) hat, koaxial zu Letzterer ist und mit dem Stator (10a) fest verbunden ist, also dicht im Verhältnis zur ersten Scheibe (5) drehen kann und den von dem Deckel (4) begrenzten Kasten verschließt, wobei die zweite Scheibe (6) einen Lufteinlass (3) aufweist, der in der Nähe des Stators (10a) angeordnet ist, wobei sich die Seitenwände des Deckels (4) in einem Abstand (D) vom Rotor (10b) befinden, der derart ist, dass der in der zweiten Scheibe (6) eingearbeitete Lufteinlass (3) für alle Winkelausrichtungen des Rotors (10b) im Verhältnis zum Stator (10a) immer mindestens zum Teil in das Volumen des Kastens ausmündet.

2. - Vorrichtung zur Verteilung von Luft (1) nach Anspruch 1, **dadurch gekennzeichnet, dass** der Lufteinlass (3) eine L-Form hat, die zum Teil von dem Stator (10a) begrenzt ist.

3. - Vorrichtung zur Verteilung von Luft (1) nach einem der Ansprüche 1 oder 2, **dadurch gekennzeichnet, dass** der Rotor (10b) mit einer Bodenwand des Deckels (4) fest verbunden ist.

4. - Vorrichtung zur Verteilung von Luft (1) nach einem der Ansprüche 1 bis 3, **dadurch gekennzeichnet, dass** mindestens ein Luftauslass (2) von dem oder den Lustauslässen (2) im Bereich einer der Seitenwände des Deckels (4) eingearbeitet ist.

5. - Vorrichtung zur Verteilung von Luft (1) nach einem der Ansprüche 1 bis 4, **dadurch gekennzeichnet, dass** mindestens ein Luftauslass (2) von dem oder den Luftauslässen (2) im Bereich einer Bodenwand des Deckels (4) eingearbeitet ist.

## Claims

1. - Device (1) for distributing air-conditioning air for a turret (102) of a vehicle (100) that is rotatably mounted relative to a chassis (101) of the vehicle, the device (1) comprising a rotating joint (10) intended for electrically connecting the turret (102) and the chassis (101) of the vehicle (100) and to be coaxial with the turret (102), the rotating joint (10) including a stator (10a) intended to be secured to the chassis (101) and a rotor (10b) intended to be secured to the turret (102), wherein the device (1) is **characterized in that** it includes a cover (4) that forms a chamber delimiting a volume in which the rotor (10b) is housed and that is perforated by at least one air outlet (2), wherein the cover (4) is secured in an airtight fashion to the rotor (10b), wherein the cover (4) is located at the center of a first disc (5) to which the edges of the side walls of the cover (4) are secured, the device (1) includes a second disc (6) which is pressed against the first disc (5) with a sealing means (7) interposed therebetween, wherein the second disc (6) has substantially the same diameter as the first disc (5), is coaxial with it and is secured to the stator (10a), and can thus rotate in an airtight fashion relative to the first disc (5) and seals the chamber delimited by the cover (4), wherein the second disc (6) includes an air inlet (3) provided near the stator (10a), wherein the side walls of the cover (4) are located at such a distance (D) from the rotor (10b) that the air inlet (3) provided in the second disc (6) is always at least partly open into the volume of the chamber in all angular orientations of the rotor (10b) relative to the stator (10a).

2. - The device (1) for distributing air according to claim 1, **characterized in that** the air inlet (3) has an L shape delimited in part by the stator (10a).

3. - The device (1) for distributing air according to any one of claims 1 and 2, **characterized in that** the rotor (10b) is secured to a bottom wall of the cover (4).

4. - The device (1) for distributing air according to any one of claims 1 to 3, **characterized in that** at least one air outlet (2) of the one or more air outlets (2) is provided at one of the side walls of the cover (4).

5. - The device (1) for distributing air according to any any one of claims 1 to 4, **characterized in that** at least one air outlet (2) of the one or more air outlets (2) is provided at a bottom wall of the cover (4).
